# EUROPÄISCHE PATENTSCHRIFT

(11) **EP 3 271 623 B1**
(45) Veröffentlichungstag und Bekanntmachung des Hinweises auf die Patenterteilung: **16.12.2020**
(21) Anmeldenummer: 16710958.6
(22) Anmeldetag: 15.03.2016
(51) Int. Cl.: F16K 1/48

(54) **HUBVENTIL MIT DREHENTKOPPLUNGSEINRICHTUNG**
LIFTING VALVE HAVING A ROTATIONAL DECOUPLING DEVICE
ROBINET À SOUPAPE COMPORTANT UN DISPOSITIF DE DÉSACCOUPLEMENT ROTATIF

(30) Priorität: 19.03.2015 DE 102015003692
(43) Veröffentlichungstag der Anmeldung: 24.01.2018
(73) Patentinhaber: GEA Tuchenhagen GmbH, 21514 Büchen (DE)
(72) Erfinder: PIEPLOW, Jörg, 23564 Lübeck (DE); BURMESTER, Jens, 23883 Grambek (DE)
(74) Vertreter: Hauck Patentanwaltspartnerschaft mbB
(86) Internationale Anmeldenummer: PCT/EP2016/055580
(87) Internationale Veröffentlichungsnummer: WO 2016/146632

(56) Entgegenhaltungen:
- WO-A1-2009/026067
- WO-A1-2013/170931
- US-A- 5 261 449
- US-A1- 2004 155 216

## Beschreibung

Die Erfindung betrifft ein Hubventil mit Drehentkopplungseinrichtung nach dem Oberbegriff des ersten Anspruchs.

Hubventile mit Drehentkopplungseinrichtungen sind im Stand der Technik bekannt und werden seit vielen Jahren erfolgreich in der Prozessindustrie eingesetzt. Prozessindustrie meint hier insbesondere die Getränketechnik, Lebensmitteltechnik, Pharmazie und Biochemie.

Ein erstes Hubventil mit Drehentkopplungseinrichtung zeigt die DE 299 19 298 U1. Das Verschlussteil dieses Hubventils ist ummantelt, wobei die Ummantelung in einen Balg übergeht, welcher eine Ventilstange umgibt. Damit sich Verschlussteil und Balg nicht mit der einer Antriebsstange mitdrehen, ist die Verbindung von Antriebsstange und Ventilstange drehentkoppelt ausgeführt. Die Antriebsstange besitzt einen hülsenförmigen Abschnitt, in dem ein Sprengring formschlüssig in einer Nut aufgenommen ist. Die Ventilstange taucht in den hülsenförmigen Abschnitt ein und ist so geformt, dass der Sprengring die axiale Bewegung von Antriebsstange und Ventilstange gegeneinander begrenzt, eine Drehung jedoch zulässt.

Ein weiteres Hubventil mit Drehentkopplungseinrichtung wird in der WO 2013/170931 A1 vorgeschlagen. Ein zylindrischer Fortsatz an einer Ventilstange ist in einer zylindrischen Aufnahme an einer Antriebsstange aufgenommen. Eine u-förmige Scheibe sichert den zylindrischen Fortsatz derart in der Aufnahme, dass sich der Fortsatz in der Aufnahme drehen kann aber gegen axiale Verschiebung durch einen Formschluss gesichert ist.

Abhängig von der Baugröße des Hubventils werden während des Schaltvorgangs erhebliche axiale Kräfte auf die Drehentkopplung ausgeübt. Dies kann zu einer Fehlfunktion führen, so dass keine Entkopplung mehr stattfindet und sich Ventilstange und Antriebsstange gemeinsam drehen. Schlimmstenfalls kann es zu einem kompletten Versagen der Verbindung kommen. Die genannten erheblichen Kräfte treten beispielsweise bei Hubventilen mit einem Strömungsdurchmesser von 100 mm und größer, einem Luftdruck zum Schalten des Huben von 8.000 hPa und Drücken des Mediums von 2.000 bis 3.000 hPa, in einigen Anwendungen auch bis zu 6.000 hPa, auf.

Aus WO 2009/026067 A1 ist eine Vorrichtung zum Verbinden einer Ventilstange mit einem Ventilglied bekannt. Die Vorrichtung umfasst eine Kupplung mit zwei gegenüber angeordneten schalenförmigen Kupplungselementen. Ein elastisches Element ist vorgesehen, das die Ventilstange und das Ventilglied voneinander weg und jeweils gegen die Kupplungselemente presst für eine spielfreie Anordnung. Weitere derartige Vorrichtungen zum Verbinden von Ventilstangen mit Ventilelementen sind bekannt aus US 2004/0155216 A1 und US 5,261,449 A.

Es ist daher Aufgabe der Erfindung, ein Hubventil zu schaffen, in welchem eine einfach aufgebaute Drehentkopplungseinrichtung zur Aufnahme großer axialer Beanspruchungen geeignet ist.

Diese Aufgabe wird gelöst durch ein Hubventil mit einer Drehentkopplungseinrichtung mit den Merkmalen des ersten Anspruchs. Die abhängigen Ansprüche geben vorteilhafte Weiterbildungen dieser Erfindung an.

Die Drehentkopplungseinrichtung weist wenigstens zwei Schalensegmente auf. Jedes der Schalensegmente bildet einen Formschluss gegen Bewegung in Richtung der Hubbewegung mit der Ventilstange und einem an der Antriebsstange vorgesehenen Kupplungselement. Der Formschluss dient zur Übertragung der Kräfte, die in Richtung der Hubbewegung einwirken, beispielsweise die Hubkraft. Der schalenartige Aufbau erlaubt eine sichere Führung der Drehbewegung der Stangen relativ zueinander. Durch die Schalenstruktur befindet sich das kraftübertragende Element im radial äußeren Bereich der Stangen. Dies ist von großem Vorteil für den Kraftfluss und verbessert die Aufnahme großer axialer Beanspruchungen. Die Drehentkopplungseinrichtung weist nur wenige Bauteile auf und ist einfach zu montieren.

Anhand eines Ausführungsbeispiels und seiner Weiterbildungen sollen die Erfindung näher erläutert und die Darstellung der Wirkungen und Vorteile vertieft werden.
Es zeigen:
- **Fig. 1:**: Längsschnitt durch ein Hubventil mit Drehentkopplungseinrichtung;
- **Fig. 2:**: Explosionszeichnung der Drehentkopplungseinrichtung, geschnitten;
- **Fig. 3:**: Explodierte, perspektivische Darstellung der Drehentkopplungseinrichtung.

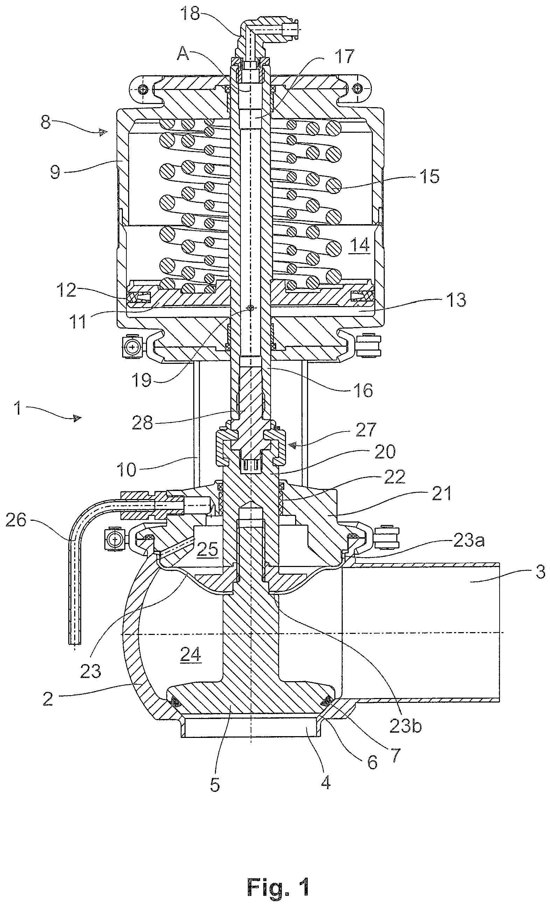

In einem Längsschnitt zeigt Fig. 1 ein Hubventil 1. An einem Gehäuse 2 des Hubventils sind ein erster Anschluss 3 und ein zweiter Anschluss 4 vorgesehen, mit welchen das Hubventil 1 mit anderen Komponenten verbindbar ist, beispielsweise einem Behälter oder einer Rohrleitung einer Prozessanlage. Innerhalb des Gehäuses 2 ist ein Schließkörper 5 angeordnet, welcher in dichtenden Kontakt mit einem Ventilsitz 6 bringbar ist. Der Ventilsitz 6 ist im Gehäuse 2 ausgebildet und umgibt den zweiten Anschluss 4. Durch den dichtenden Kontakt wird eine Fluidverbindung zwischen erstem Anschluss 3 und zweitem Anschluss 4 unterbrochen. Der dichtende Kontakt kann mit einer Ventildichtung 7 unterstützt werden, die aus einem Elastomer hergestellt sein kann.

Der Schließkörper 5 ist in einer an der Längsachse A ausgerichteten Hubbewegung bewegbar ausgeführt, um den dichtenden Kontakt herstellen oder lösen zu können. Diese Hubbewegung ist beispielsweise mittels eines Hubantriebes 8 bewirkbar, der in diesem Beispiel vorteilhaft druckmittelbetrieben ausgeführt.

Der Hubantrieb 8 umfasst ein Antriebsgehäuse 9, welches über eine Laterne 10 mit dem Gehäuse 2 des Hubventils 1 verbunden ist. In dem Antriebsgehäuse 9 ist ein Kolben 11 vorgesehen, der an einem Umfang mittels einer Kolbendichtung 12 gegen das Antriebsgehäuse 9 abgedichtet ist und einen Innenraum des Antriebsgehäuses 9 in einen Druckraum 13 und eine Federkammer 14 unterteilt. Der Druckraum 13 ist mit einem Druckmittel, beispielsweise dem Gas aus einer Pneumatikanlage, beaufschlagbar. Durch den Gasdruck wird der Kolben 11 bewegt. Dieser Bewegung wirkt die Kraft wenigstens einer Feder 15 entgegen, die in der Federkammer 14 vorgesehen ist.

Der Kolben 11 ist auf einer Antriebsstange 16 befestigt, auf die die Bewegung des Kolbens 11 bei Druckmitteleinwirkung übertragen wird. Innerhalb der Antriebsstange 16 ist ein Druckmittelkanal 17 ausgeformt, welcher eine Fluidverbindung zwischen einem Druckmittelanschluss 18 und einer Querbohrung 19 schafft. Durch die Querbohrung 19 tritt bei Druckmittelbeaufschlagung Gas aus dem Druckmittelkanal 17 in den Druckraum 13 ein und bewirkt dort die Druckerhöhung und in der Folge die Bewegung des Kolbens 11.

Die Antriebsstange 16 ist mit einer Ventilstange 20 verbunden, welche ihrerseits mit dem Schließkörper 5 verbunden ist und die im Hubantrieb 8 bewirkte Hubbewegung auf den Schließkörper 5 überträgt. Die Ventilstange 20 durchsetzt ein Gehäuseteil 21 des Gehäuses 2 des Hubventils 1. Eine Durchführung 22 dichtet zum einen die Durchtrittsstelle ab und sorgt für eine Führung der Hubbewegung.

Im Gehäuse 2 ist zudem als dichtendes Element eine Membran 23 vorgesehen, die zwischen dem Gehäuse 2 und dem Gehäuseteil 21 einerseits und an der Ventilstange 20 andererseits gefasst ist. Die Membran 23 dichtet den Ventilraum 24 des Hubventils 1 gegen die Durchführung 22 ab. Zwischen der Membran 23 und dem Gehäuseteil 21 ist ein Leckageraum 25 ausgebildet. Sollte die Membran 23 undicht werden, gelangt Fluid als so genannte Leckage aus dem Ventilraum 24 in den Leckageraum 25. Von dort kann es durch einen Leckageablauf 26 in die Umgebung des Hubventils 1 gelangen und dort nachgewiesen werden. Ein Versagen der Dichtwirkung der Membran 23 ist auf diese Weise sicher nachweisbar. Die Notwendigkeit eines Wechsels der Membran 23 ist aus der Leckage ersichtlich.

Die Membran 23 ist als scheibenförmiger Körper geformt, der gewölbte Abschnitte aufweist. Zudem besitzt die Membran 23 ein zentrales Loch, so dass ein ringartiger Körper geformt ist, welcher einen Außenrand 23a und einen Innenrand 23b besitzt. Der Außenrand 23a ist gehäuseseitig befestigt, beispielsweise durch Klemmung und Einspannung zwischen dem Gehäuse 2 dem Gehäuseteil 21. Der Innenrand 23b ist an der Ventilstange 20 festgelegt. Beide Befestigungsstellen bewirken mit ihrer Gestalt die Befestigung und die Abdichtung, so dass Fluid nicht an der Befestigungsstelle zwischen Membran 23 und Gehäuse 2 beziehungsweise Membran 23 und Ventilstange 20 hindurchtreten kann.

Der Hubantrieb 8 kann neben dem Hub eine Drehung der Antriebsstange 16 um die Längsachse A bewirken. Diese Drehbewegung sollte nicht auf den Schließkörper 5 übertragen werden und ist besonders nachteilig, wenn das Hubventil 1 die Membran 23 besitzt. Um diese Drehung oder die dieser zu Grunde liegenden Drehmomente von Schließkörper 5 und Membran 23 fernzuhalten, ist zwischen Antriebsstange 16 und Ventilstange 20 eine Drehentkopplungseinrichtung 27 vorgesehen. In dem hier vorgestellten Beispiel umfasst die Antriebsstange 16 ein Kupplungselement 28, welches mit der Drehentkopplungseinrichtung 27 zusammenwirkt. Die Drehentkopplungseinrichtung 27 kann innerhalb der Laterne 10 und somit zwischen Durchführung 22 und Hubantrieb 8 angeordnet sein. Dies ist eine vorteilhafte Ausführung, da im Bereich der Laterne 10 ohnehin vorhandener Bauraum ausgenutzt wird und eine leichte Funktionsüberwachung der Drehentkopplungseinrichtung 27 durch Sichtkontrolle möglich ist.

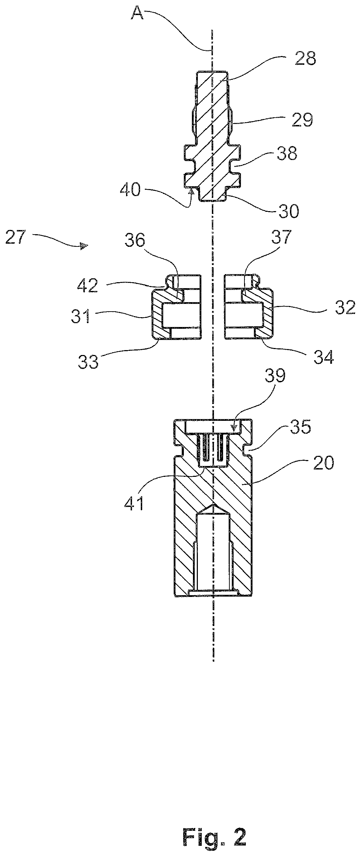

Die **Fig. 2** zeigt die Drehentkopplungseinrichtung 27 im Schnitt entlang der Längsachse A und in explodierter Ansicht.

Das Kupplungselement 28 weist an seiner Außenseite ein Gewinde 29 auf, welches in ein Gewinde der Antriebsstange 16 eingreift. Um diese Schraubverbindung sicher herstellen zu können, ist an dem Kupplungselement 28 ein Schlüsselabschnitt 30 ausgeformt. Der Schlüsselabschnitt 30 besitzt Flächen, an die beispielsweise ein Schraubenschlüssel angesetzt werden kann.

Die Drehentkopplungseinrichtung 27 umfasst ein erstes Schalensegment 31 und ein zweites Schalensegment 32. Im montierten Zustand der Drehentkopplungseinrichtung 27 bilden die Schalensegmente 31, 32 eine weitgehend geschlossene Schale, die Ventilstange 20 und Kupplungselement 28 umschließt. Es ist vorteilhaft, die Anzahl der verwendeten Schalensegmente 31, 32 auf zwei zu begrenzen, da dies Zahl der zu montierenden Bauteile gering hält und Toleranzketten verkürzt werden.

An den Schalensegmenten 31 und 32 sind an einem Innenrand ein erster Vorsprung 33 und ein zweiter Vorsprung 34 vorgesehen. Erster und zweiter Vorsprung 33 und 34 bilden zusammen einen am Innenrand umlaufenden Ring. An der Ventilstange 20 ist eine erste Umfangsnut 35 ausgebildet, in die erster und zweiter Vorsprung 33 und 34 im montierten Zustand der Drehentkopplungseinrichtung 27 unter Ausbildung eines Formschlusses eingreifen. Die Bauteile 20, 31 und 32 sind so bearbeitet, dass sich möglichst kein Spiel in axialer Richtung ergibt. Sie können so geformt sein, dass erstes und zweites Schalensegment 31 und 32 gegen Verdrehen gesichert auf der Ventilstange 20 klemmen.

Ein dritter Vorsprung 36 ist am ersten Schalensegment 31 und ein vierter Vorsprung 37 am zweiten Schalensegment 32 vorgesehen. Dritter und vierter Vorsprung 36 und 37 bilden zusammen ebenfalls einen am Innenrand der Schalensegmente 31 und 32 umlaufenden Ring. Sie greifen im montierten Zustand der Drehentkopplungseinrichtung 27 in eine zweite Umfangsnut 38 ein, welche am Kupplungselement 28 angeordnet ist. Zweite Umfangsnut 38 sowie dritter und vierter Vorsprung 36 und 37 sind so geformt, dass ein Formschluss gegen Kräfte gebildet wird, die entlang der Längsachse gerichtet sind, jedoch eine Verdrehung des Kupplungselements 28 in erstem und zweitem Schalensegment 31 und 32 und somit in der Drehentkopplungseinrichtung 27 möglich ist. Die Möglichkeit der Verdrehung kann beispielsweise erreicht werden, in dem durch Wahl der Abmessungen der Vorsprünge 33, 34, 36 und 37 und der Umfangsnuten 35 und 38 die Vorsprünge 33, 34, 36 und 37 ein Spiel in den Umfangsnuten 35 und 38 besitzen.

Erste Umfangsnut 35 und zweite Umfangsnut 38 sowie erster, zweiter, dritter und vierter Vorsprung 33, 34, 36, und 37 können vorzugsweise Wandflächen aufweisen, die im Wesentlichen parallel zueinander sind und deren Flächennormalen an der Längsachse A ausgerichtet sind. Dies bewirkt eine vorteilhaft gute Krafteinleitung für Kräfte, die entlang der Achse A wirken, insbesondere in einer Aufwärtsbewegung, in der der Schließkörper 5 aus der Schließstellung entfernt wird und Ventilsitz 6 und Ventildichtung 7 voneinander getrennt werden. In der Aufwärtsbewegung können entlang der Längsachse A wirkende Kräfte durch den Kontakt der Vorsprünge 33, 34, 36 und 37 mit der erster und zweiter Umfangsnut 35 und 38 übertragen werden.

Die gezeigte Anordnung ist gut zur Aufnahme einer Kraft geeignet, die so ausgerichtet ist, dass Antriebsstange 16 und Ventilstange 20 gegeneinander gedrückt werden. An der Ventilstange 20 ist eine erste Anschlagfläche 39 vorgesehen. An dieser ersten Anschlagfläche 39 kommt eine zweite Anschlagfläche 40 zur Anlage, die am Kupplungselement 28 ausgebildet ist. In einer Abwärtsbewegung des Schließkörpers 5, die diesen in die Schließstellung bringt, und in der Schließstellung wird die entlang der Längsachse gerichtete Kraft des Hubantriebes 8 über den Kontakt der Anschlagflächen 39 und 40 übertragen. Vorteilhaft sind die Anschlagflächen 39 und 40 daher parallel zueinander ausgebildet und die jeweilige Flächennormale an der Längsachse A ausgerichtet.

An einer dem Kupplungselement 28 zugewandten Stirnseite besitzt die Ventilstange 20 eine Ausnehmung 41. Diese ist so geformt, dass sie den Schlüsselabschnitt 30 aufnimmt. Zwischen Schlüsselabschnitt 30 und Ausnehmung 41 besteht so viel Spiel, dass die oben beschriebenen Funktionen der Drehentkopplungseinrichtung 27 nicht beeinträchtigt sind. Die Ausnehmung kann vorteilhaft so gestaltet sein, dass sie mit einem Werkzeug zusammenwirken kann, welches zum Einleiten eines Drehmoments in die Ventilstange 20 verwendet wird. Dieses wird genutzt, um eine Verbindung zwischen Ventilstange 20 und Schließkörper 5 herzustellen, beispielsweise eine Schraubverbindung.

Die Schalensegmente 31 und 32 sind durch geeignete Verbindungsmittel vorzugsweise lösbar miteinander verbunden, beispielsweise durch entlang von Sekanten verlaufenden Schrauben. Das Beispiel zeigt eine einfache Form der gesicherten Montage.

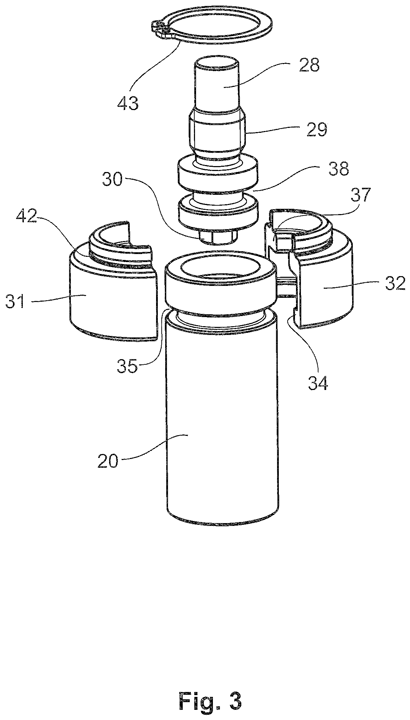

An der aus erstem und zweitem Schalensegment 31 und 32 gebildeten Schale ist eine Außennut 42 geformt. Diese ist zur Aufnahme eines in der perspektivischen Darstellung der Drehentkopplungseinrichtung 27 der Fig. 3 gezeigten Sicherungsringes 43 gestaltet.

Die Erfindung wurde anhand eines Einsitzventils vorgestellt, ist jedoch nicht auf die Anwendung in diesem Ventiltyp beschränkt. Auch in Ventilen, die mehrere Dichtungen am Schließkörper aufweisen, so genannte doppeldichte Ventile, oder in Umschaltventilen sowie in Doppelsitzventilen mit mehreren Schließkörpern ist die Erfindung sinnvoll anwendbar, um das Einwirken von Drehbewegungen, die im Antrieb ausgelöst werden, auf den oder die Schließkörper bestmöglich zu verhindern. Anhand der vorgestellten Funktionsweise erschließen sich dem Fachmann auf dem Gebiet der Ventiltechnik die möglichen Anwendungen in den Ventilen der Lebensmittel- und Prozesstechnologie.

### Bezugszeichenliste

- 1: Hubventil
- 2: Gehäuse
- 3: erster Anschluss
- 4: zweiter Anschluss
- 5: Schließkörper
- 6: Ventilsitz
- 7: Ventildichtung
- 8: Hubantrieb
- 9: Antriebsgehäuse
- 10: Laterne
- 11: Kolben
- 12: Kolbendichtung
- 13: Druckraum
- 14: Federkammer
- 15: Feder
- 16: Antriebsstange
- 17: Druckmittelkanal
- 18: Druckmittelanschluss
- 19: Querbohrung
- 20: Ventilstange
- 21: Gehäuseteil
- 22: Durchführung
- 23: Membran
- 23a: Außenrand
- 23b: Innenrand
- 24: Ventilraum
- 25: Leckageraum
- 26: Leckageablauf
- 27: Drehentkopplungseinrichtung
- 28: Kupplungselement
- 29: Gewinde
- 30: Schlüsselabschnitt
- 31: erstes Schalensegment
- 32: zweites Schalensegment
- 33: erster Vorsprung
- 34: zweiter Vorsprung
- 35: erste Umfangsnut
- 36: dritter Vorsprung
- 37: vierter Vorsprung
- 38: zweite Umfangsnut
- 39: erste Anlagefläche
- 40: zweite Anlagenfläche
- 41: Ausnehmung
- 42: Außennut
- 43: Sicherungsring

- A: Längsachse

## Patentansprüche

1. Hubventil mit einem Schließkörper (5), einer mit dem Schließkörper (5) verbundenen Ventilstange (20), einem Hubantrieb (8), mittels welchem ein Hub des Schließkörpers (5) bewirkbar ist, einer mit der Ventilstange (20) wirkverbundenen Antriebsstange (16) und einer zwischen Ventilstange (20) und Antriebsstange (16) vorgesehenen Drehentkopplungseinrichtung (27), **wobei** die Drehentkopplungseinrichtung (27) wenigstens zwei Schalensegmente (31, 32) umfasst, die Antriebsstange (16) ein Kupplungselement (28) aufweist und die Schalensegmente (31, 32) einen Formschluss in Richtung der Hubbewegung mit der Ventilstange (20) und einen Formschluss in Richtung der Hubbewegung mit dem Kupplungselement (28) bilden, **dadurch gekennzeichnet, dass** ein Innenraum des Hubventils (1) mittels einer Membran (23) gegen eine Durchführung (22) der Ventilstange (20) durch ein dem Hubantrieb (8) zugewandtes Gehäuseteil (21) abgedichtet ist, dass Kupplungselement (28), erstes und zweites Schalensegment (31, 32) so geformt sind, dass eine Verdrehung des Kupplungselements (28) in erstem und zweitem Schalensegment (31, 32) möglich ist, wobei Vorsprünge (33, 34, 36, 37) der Schalensegmente (31, 32) mit Spiel in mindestens einer Umfangsnut (35, 38) des Kupplungselements (28) aufgenommen sind, und dass die Schalensegmente (31, 32) durch Verbindungsmittel lösbar miteinander verbunden sind.

2. Hubventil nach Anspruch 1, **dadurch gekennzeichnet, dass** die Membran (23) scheibenförmig und ringartig ausgeführt ist, wobei ein Innenrand (23b) der Membran (23) an der Ventilstange (20) befestigt ist.

3. Hubventil nach Anspruch 2, **dadurch gekennzeichnet, dass** ein Außenrand (23a) der Membran (23) an einem Gehäuse (2) des Hubventils befestigt ist.

4. Hubventil nach einem der vorhergehenden Ansprüche, **dadurch gekennzeichnet, dass** die Drehentkopplungseinrichtung (27) zwischen der Durchführung (22) und dem Hubantrieb (8) angeordnet ist, vorzugsweise innerhalb einer zwischen der Durchführung (22) und dem Hubantrieb (8) angeordneten Laterne (10).

5. Hubventil nach einem der vorhergehenden Ansprüche, **dadurch gekennzeichnet, dass** Kupplungselement (28) und Antriebsstange (16) lösbar miteinander verbunden sind.

6. Hubventil nach einem der vorhergehenden Ansprüche, **dadurch gekennzeichnet, dass** die Vorsprünge (33, 34, 36, 37) der Schalensegmente (31, 32) Wandflächen besitzen, die bei einer Hubbewegung mit Wandflächen der mindestens einen Umfangsnut (35, 38) des Kupplungselements (28) zusammenwirken.

7. Hubventil nach Anspruch 6, **dadurch gekennzeichnet, dass** die Wandflächen der Vorsprünge (33, 34, 36, 37) der Schalensegmente (31, 32) parallel zu den Wandflächen der mindestens einen Umfangsnut (35, 38) des Kupplungselements (28) ausgerichtet sind, wobei die Flächennormalen der Wandflächen parallel zu der Längsachse (A) der Antriebsstange (16) verlaufen.

## Claims

1. A globe valve comprising a closing element (5), a valve rod (20) connected to the closing element (5), a lift drive (8), by means of which the closing body (5) can be lifted, a drive rod (16) that is operatively connected to the valve rod (20), and a rotation decoupling apparatus (27) provided between the valve rod (20) and drive rod (16), **wherein** the rotation decoupling apparatus (27) comprises at least two shell segments (31, 32), the drive rod (16) comprises a coupling element (28) and the shell segments (31, 32) form a positive engagement with the valve rod (20) in the direction of the lifting movement and a positive engagement with the coupling element (28) in the direction of the lifting movement, **characterized in that** an internal space of the globe valve (1) is sealed off by means of a membrane (23) from a bushing (22) of the valve rod (20) through a housing portion (21) facing the lift drive (8), **in that** the coupling element (28) and the first and second shell segment (31, 32) are shaped such that the coupling element (28) can rotate in the first and second shell segment (31, 32), wherein projections (33, 34, 36, 37) of the shell segments (31, 32) are received with clearance in at least one circumferential groove (35, 38) of the coupling element (28), and **in that** the shell segments (31, 32) are releasably interconnected by connection means.

2. The globe valve according to claim 1, **characterized in that** the membrane (23) is disk-shaped and annular, wherein an inner edge (23b) of the membrane (23) is fastened to the valve rod (20).

3. The globe valve according to claim 2, **characterized in that** an outer edge (23a) of the membrane (23) is fastened to a housing (2) of the globe valve.

4. The globe valve according to any one of the preceding claims, **characterized in that** the rotation decoupling apparatus (27) is arranged between the bushing (22) and the globe drive (8), preferably inside a lantern (10) arranged between the bushing (22) and the lift drive (8).

5. The globe valve according to any one of the preceding claims, **characterized in that** the coupling element (28) and drive rod (16) are releasably interconnected.

6. The globe valve according to any one of the preceding claims, **characterized in that** the projections (33, 34, 36, 37) of the shell segments (31, 32) have wall surfaces that interact with wall surfaces of the at least one circumferential groove (35, 38) of the coupling element (28) during a lifting movement.

7. The globe valve according to claim 6, **characterized in that** the wall surfaces of the projections (33, 34, 36, 37) of the shell segments (31, 32) are oriented in parallel with the wall surfaces of the at least one circumferential groove (35, 38) of the coupling element (28), wherein the surface normals of the wall surfaces extend in parallel with the longitudinal axis (A) of the drive rod (16).

## Revendications

1. Robinet à soupape avec un corps de fermeture (5), une tige de soupape (20) reliée au corps de fermeture (5), un entraînement de levage (8) permettant d'effectuer un levage du corps de fermeture (5), une tige d'entraînement (16) fonctionnellement reliée à la tige de soupape (20) et un dispositif de désaccouplement rotatif (27) prévu entre la tige de soupape (20) et la tige d'entraînement (16),
**dans lequel** le dispositif de désaccouplement rotatif (27) comporte au moins deux segments de coquille (31, 32), la tige d'entraînement (16) présente un élément d'accouplement (28) et les segments de coquille (31, 32) forment un engagement positif avec la tige de soupape (20) dans la direction du mouvement de levage et un engagement positif avec l'élément d'accouplement (28) dans la direction du mouvement de levage, **caractérisé en ce qu'**un espace intérieur du robinet à soupape (1) est rendu étanche au moyen d'une membrane (23) par rapport à un passage (22) de la tige de soupape (20) à travers une partie de boîtier (21) tournée vers l'entraînement de levage (8), **en ce que** l'élément d'accouplement (28), les premier et deuxième segments de coquille (31, 32) sont formés de manière à permettre une rotation de l'élément d'accouplement (28) dans le premier et le deuxième segment de coquille (31, 32), des saillies (33, 34, 36, 37) des segments de coquille (31, 32) étant reçues avec un jeu dans au moins une rainure circonférentielle (35, 38) de l'élément d'accouplement (28), et **en ce que** les segments de coquille (31, 32) sont reliés entre eux de façon amovible par des moyens de liaison.

2. Robinet à soupape selon la revendication 1, **caractérisé en ce que** la membrane (23) est conçue en forme de disque et d'anneau, dans lequel un bord intérieur (23b) de la membrane (23) est fixé à la tige de soupape (20).

3. Robinet à soupape selon la revendication 2, **caractérisé en ce qu'**un bord extérieur (23a) de la membrane (23) est fixé à un boîtier (2) du robinet à soupape.

4. Robinet à soupape selon l'une des revendications précédentes, **caractérisé en ce que** le dispositif de désaccouplement rotatif (27) est disposé entre le passage (22) et l'entraînement de levage (8), de préférence à l'intérieur d'une lanterne (10) disposée entre le passage (22) et l'entraînement de levage (8).

5. Robinet à soupape selon l'une des revendications précédentes, **caractérisé en ce que** l'élément d'accouplement (28) et la tige d'entraînement (16) sont reliés entre eux de façon amovible.

6. Robinet à soupape selon l'une des revendications précédentes, **caractérisé en ce que** les saillies (33, 34, 36, 37) des segments de coquille (31, 32) possèdent des surfaces de paroi, lesquelles coopèrent avec des surfaces de paroi de l'au moins une rainure circonférentielle (35, 38) de l'élément d'accouplement (28) lors d'un mouvement de levage.

7. Robinet à soupape selon la revendication 6, **caractérisé en ce que** les surfaces de paroi des saillies (33, 34, 36, 37) des segments de coquille (31, 32) sont orientées parallèlement aux surfaces de paroi de l'au moins une rainure circonférentielle (35, 38) de l'élément d'accouplement (28), les normales de surface des surfaces de paroi s'étendant parallèlement à l'axe longitudinal (A) de la tige d'entraînement (16).
